# EUROPEAN PATENT SPECIFICATION

(11) **EP 4 525 404 B1**
(45) Date of publication and mention of the grant of the patent: **25.02.2026**
(21) Application number: 23814909.0
(22) Date of filing: 09.05.2023
(51) Int. Cl.: H04L 65/60, H04N 21/234, H04N 21/647, H04N 21/2187, H04L 65/612

(54) **STREAMING MEDIA DATA PROCESSING METHOD AND SYSTEM**
VERFAHREN UND SYSTEM ZUR VERARBEITUNG VON STREAMING-MEDIENDATEN
PROCÉDÉ ET SYSTÈME DE TRAITEMENT DE DONNÉES MULTIMÉDIAS DE DIFFUSION EN CONTINU

(30) Priority: 01.06.2022 CN 202210618490
(43) Date of publication of application: 19.03.2025
(73) Proprietor: ZTE CORPORATION, Shenzhen, Guangdong 518057 (CN)
(72) Inventor: CHEN, Junjiang, Shenzhen, Guangdong 518057 (CN); TU, Yingzhe, Shenzhen, Guangdong 518057 (CN); ZHANG, Shengwen, Shenzhen, Guangdong 518057 (CN); CHEN, Yong, Shenzhen, Guangdong 518057 (CN); LU, Jian, Shenzhen, Guangdong 518057 (CN)
(74) Representative: Carangelo, Pierluigi
(86) International application number: PCT/CN2023/093058
(87) International publication number: WO 2023/231723

(56) References cited:
- WO-A1-2016/197659
- CN-A- 106 302 372
- CN-A- 112 995 753
- CN-A- 113 553 346
- US-A1- 2005 278 473
- US-A1- 2022 141 273

## Description

### Technical Field

Embodiments of the present disclosure relate to the field of streaming media data processing, and in particular, to a streaming media data processing method and system.

### Background

At present, 5th Generation Mobile Communication Technology (5G) is gradually entering the commercial era, which has brought profound impacts and changes to the global audio and video industry, and has also made streaming media systems serving products and services such as video conferencing, video Internet of Things, and video middle platforms an important mechanism for information dissemination. The quantitative change in speed brought by 5G will promote qualitative changes in the entire industry and will also help accelerate the development of the streaming media systems.

In general, the streaming media systems in the industry have live playing, recording, playback, and other main functions, and the receiving and forwarding performance thereof has become an important indicator to measure the quality of the streaming media systems. At present, the receiving and forwarding speed in the industry can reach 2 Gbps, but it is difficult to further improve. In a case of high concurrency and large traffic, the processing capacity may be greatly limited: for example, the speed of receiving data packets is not fast enough, resulting in loss at a system level; and for another example, the speed of forwarding and processing data packets is not fast enough, resulting in loss at an application level. The receiving and forwarding performance of the streaming media systems has become an important bottleneck restricting the development thereof. Patent document US2005/278473A1 provides related technical solutions; however, the above mentioned problem still remains unsolved.

### Summary

Embodiments of the present disclosure provides a streaming media data processing method and system, so as to at least solve the problem of packet loss of data of a streaming media data receiving and processing forwarding link in a case of high traffic in the related art.

According to one embodiment of the present disclosure, a streaming media data processing method is provided, including that: code stream data and message signaling are integrated to the same thread task channel according to different file descriptors, and buffered into a system buffer; a packet receiving thread acquires the code stream data from the system buffer, and stores same into an internal buffer of streaming media; and different types of service threads read the code stream data from the internal buffer of streaming media.

According to another embodiment of the present disclosure, a streaming media data processing system is provided, including: a data processing module, configured to integrate code stream data and message signaling to the same thread task channel according to different file descriptors, and buffer same into a system buffer; a data acquisition module, configured to acquire the code stream data from the system buffer, and store same into an internal buffer of streaming media; and a data reading module, configured to read the code stream data from the internal buffer of streaming media according to different types of service threads.

According to still another embodiment of the present disclosure, a computer-readable storage medium is further provided, in which a computer program is stored. The computer program is configured to execute, when running, the steps of any of the above method embodiments.

According to still another embodiment of the present disclosure, an electronic apparatus is further provided, including a memory and a processor. The memory stores a computer program, and the processor is configured to run the computer program to execute the steps in any of the above method embodiments.

### Brief Description of the Drawings

Fig. 1 is a block diagram of a hardware structure of a mobile terminal of a streaming media data processing method according to an embodiment of the present disclosure.
Fig. 2 is a diagram of a running network architecture of a streaming media data processing method according to an embodiment of the present disclosure.
Fig. 3 is a flowchart of a streaming media data processing method according to an embodiment of the present disclosure.
Fig. 4 is a flowchart of a service thread reading code stream data according to an embodiment of the present disclosure.
Fig. 5 is a flowchart of a streaming media data processing method according to an embodiment of the present disclosure.
Fig. 6 is a structural block diagram of a streaming media data processing system according to an embodiment of the present disclosure.
Fig. 7 is a structural block diagram of a data processing module according to an embodiment of the present disclosure.
Fig. 8 is a structural block diagram of a data reading module according to an embodiment of the present disclosure.
Fig. 9 is a structural block diagram of a streaming media data processing system according to an embodiment of the present disclosure.
Fig. 10 is a flowchart of streaming media data processing according to a scenario embodiment of the present disclosure.
Fig. 11 is a schematic diagram of a thread management mechanism according to a scenario embodiment of the present disclosure.
Fig. 12 is a schematic diagram of a principle of a packet receiving thread using a vertical and horizontal packet taking technology according to a scenario embodiment of the present disclosure.
Fig. 13 is a schematic diagram of a principle of a producer-consumer merging technology of a service thread according to a scenario embodiment of the present disclosure.

### Detailed Description of the Embodiments

Embodiments of the present disclosure are described below with reference to the drawings and in conjunction with the embodiments in detail.

It is to be noted that terms "first", "second" and the like in the description, claims and the above drawings of the present disclosure are used for distinguishing similar objects rather than describing a specific sequence or a precedence order.

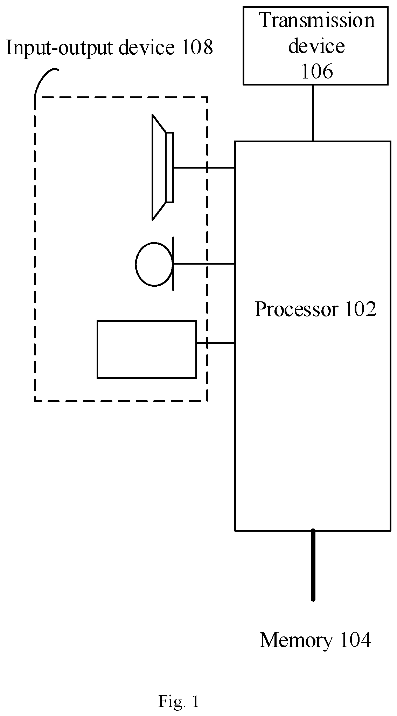

The method embodiment provided by the embodiments of the present disclosure may be implemented in a mobile terminal, a computer terminal or a similar computing apparatus. Taking running on the mobile terminal as an example, Fig. 1 is a block diagram of a hardware structure of a mobile terminal of a streaming media data processing method according to an embodiment of the present disclosure. As shown in Fig. 1, the mobile terminal may include one or more (only one is shown in Fig. 1) processors 102 (the processor 102 may include, but is not limited to, a processing apparatus such as a Micro Controller Unit (MCU) or a Field Programmable Gate Array (FPGA)) and a memory 104 for storing data. The above mobile terminal may further include a transmission device 106 and an input-output device 108 for communication functions. Those of ordinary skill in the art may understand that the structure shown in Fig. 1 is only schematic and not intended to limit the structure of the above mobile terminal. For example, the mobile terminal may further include more or fewer components than shown in Fig. 1, or has a different configuration from that shown in Fig. 1.

The memory 104 may be configured to store a computer program, for example, a software program and a module of application software, for example, a computer program corresponding to the streaming media data processing method in the embodiments of the present disclosure. The processor 102 runs the computer program stored into the memory 104, thereby executing various functional applications and data processing, namely implementing the above method. The memory 104 may include a high speed Random Access Memory (RAM) and may further include a non-volatile memory such as one or more magnetic storage apparatuses, a flash memory, or other non-volatile solid state memories. In some examples, the memory 104 may further include memories remotely located relative to the processor 102, which may be connected to the mobile terminal over a network. The examples of such networks include, but are not limited to, the Internet, the Intranet, local area networks, mobile communication networks, and combinations thereof.

The transmission module 106 is configured to receive or send data via a network. A specific example of the network may include a wireless network provided by a communication provider of the mobile terminal. In one example, the transmission device 106 includes a Network Interface Controller (NIC) that may be connected to other network devices through a base station to communicate with the Internet. In one example, the transmission device 106 may be a Radio Frequency (RF) module, for communicating with the Internet wirelessly.

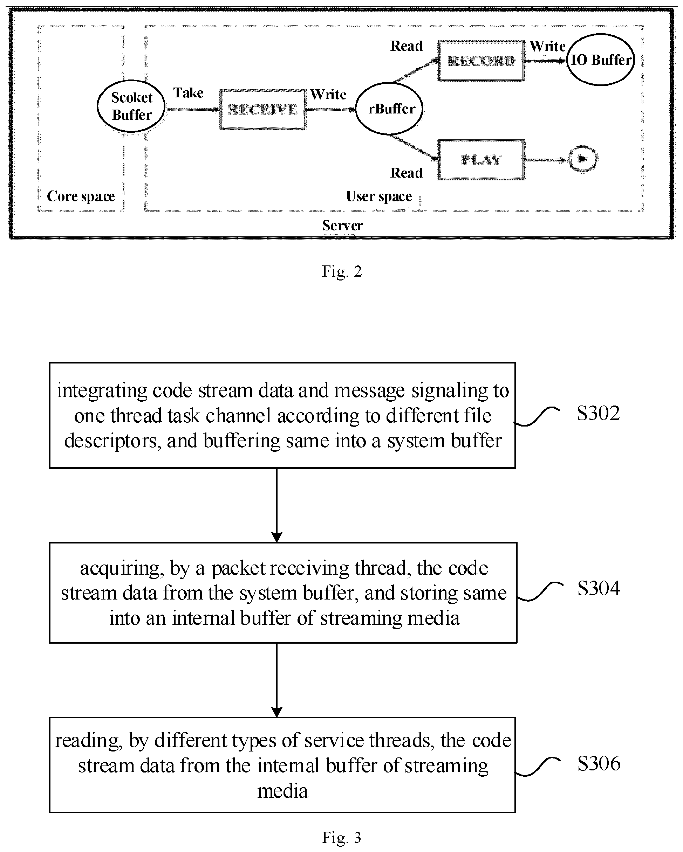

The embodiments of the present disclosure may run on a network architecture shown in Fig. 2. As shown in Fig. 2, the network architecture runs on a server, which may be a physical machine, a virtual machine, or a Docker containerized environment. The network architecture is divided into two parts: a core space and a user space, where the core space refers to an environment in which an operating system and a driver run. After entering the server, code stream data first enters the core space. The user space refers to an environment in which a streaming media runs, and the streaming media may take the code stream data from the core space to the user space. A Socket Buffer system buffer is between the core space and the user space, and the system buffer is configured to temporarily buffer the code stream data when the code stream data transitions from the core space to the user space. The user space includes various functional modules of the streaming media: a packet receiving thread RECEIVE, an internal buffer rBuffer of the streaming media, a recording thread RECORD, a storage Input/output (IO) buffer IO Buffer, and a live playing thread PLAY.

In the embodiment, a streaming media data processing method running on the above mobile terminal or network architecture is provided. Fig. 3 is a flowchart of a streaming media data processing method according to an embodiment of the present disclosure. As shown in Fig. 3, the flow includes the following steps:
S302, integrating code stream data and message signaling to one thread task channel according to different file descriptors, and buffering same into a system buffer;
S304, acquiring, by a packet receiving thread, the code stream data from the system buffer, and storing same into an internal buffer of streaming media;
S306, reading, by different types of service threads, the code stream data from the internal buffer of streaming media.

Through the above steps, the code stream data and the message signaling are integrated to the same thread task channel according to the different file descriptors, and buffered into the system buffer, which improves the receiving performance of the streaming media data; the packet receiving thread acquires the code stream data from the system buffer, and stores same into the internal buffer of streaming media; and the different types of service threads read the code stream data from the internal buffer of streaming media, which improves the processing and forwarding performance of the streaming media data and achieving the effect of improving the receiving and forwarding speed of the streaming media data.

The executive body of the above steps may be a base station, a terminal, etc., but is not limited thereto.

In one exemplary embodiment, the code stream data and the message signaling are distinguished in the same thread task channel by a socket file descriptor and a named pipe file descriptor respectively.

In one exemplary embodiment, the operation that the packet receiving thread acquires the code stream data from the system buffer includes that: a data packet structure of the code stream data is transferred by using a pointer, the packet receiving thread acquires the code stream data from the system buffer by using an asynchronous IO event triggering mechanism, and the number of packets taken and the maximum number of events are adjusted according to the traffic of the code stream data.

In one exemplary embodiment, the operation that the packet receiving thread acquires the code stream data from the system buffer further includes that: the code stream data is acquired from the system buffer by using a multi-packet-receiving-thread, and sent to a designated Central Processing Unit (CPU) in a multi-core CPU for processing, and the priority of the packet receiving thread is increased.

In one exemplary embodiment, the operation that the different types of service threads read the code stream data from the internal buffer of streaming media includes that: the packet receiving thread and the service threads transfer a data packet of the code stream data around the internal buffer of streaming media as a center in a producer/consumer mode, where the packet receiving thread is a producer and the service threads are consumers.

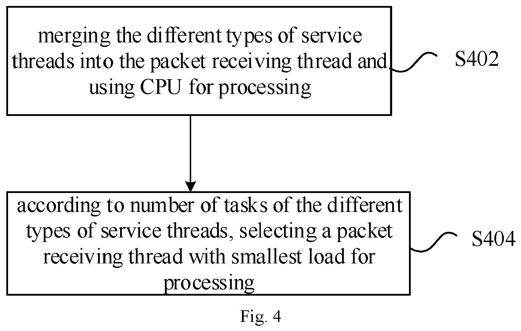

In one exemplary embodiment, Fig. 4 is a flowchart of a service thread reading code stream data according to an embodiment of the present disclosure. As shown in Fig. 4, the operation that the different types of service threads read the code stream data from the internal buffer of streaming media further includes the following steps:
S402, merging the different types of service threads into the packet receiving thread and using CPU for processing;
S404, according to number of tasks of the different types of service threads, selecting a packet receiving thread with smallest load for processing.

In one exemplary embodiment, the internal buffer of streaming media is a circular resource pool.

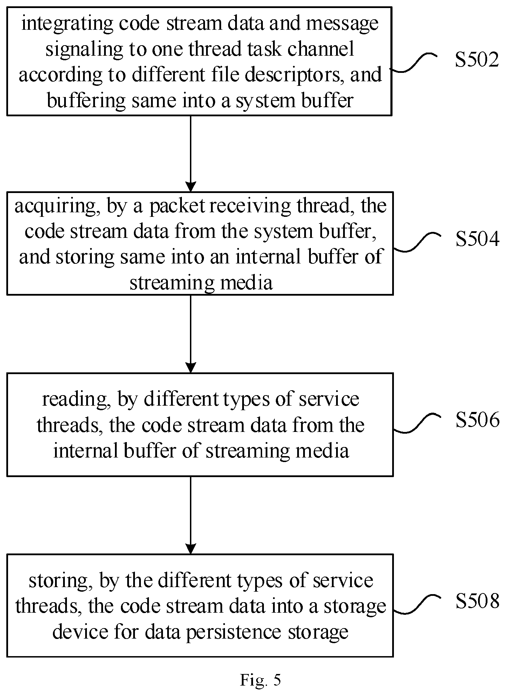

In one exemplary embodiment, Fig. 5 is a flowchart of a streaming media data processing method according to an embodiment of the present disclosure. As shown in Fig. 5, after the different types of service threads read the code stream data from the internal buffer of streaming media, the method further includes that: the different types of service threads store the code stream data into a storage device for data persistence storage, that is, the flow includes the following steps:
S502, integrating code stream data and message signaling to one thread task channel according to different file descriptors, and buffering same into a system buffer;
S504, acquiring, by a packet receiving thread, the code stream data from the system buffer, and storing same into an internal buffer of streaming media;
S506, reading, by different types of service threads, the code stream data from the internal buffer of streaming media;
S508, storing, by the different types of service threads, the code stream data into a storage device for data persistence storage.

Through the above description of implementations, those skilled in the art may clearly know that the method according to the above embodiments may be implemented by means of software plus a necessary common hardware platform, certainly by means of hardware; but in many cases, the former is the better implementation. Based on such understanding, the technical solution of the present disclosure, which is essential or contributes to the conventional art, may be embodied in the form of a software product. The computer software product is stored into a storage medium (such as a Read-Only Memory (ROM)/RAM, a magnetic disk and an optical disc), including a number of instructions for causing a terminal device (which may be a mobile phone, a computer, a server, or a network device, etc.) to perform the methods described in various embodiments of the present disclosure.

The embodiments further provide a streaming media data processing system, configured to implement the above embodiments and preferred implementations. The embodiments and preferred implementations that have been elaborated will not be repeated here. The term "module" used below can realize a combination of software and/or hardware with an intended function. Although the apparatus described in the following embodiment is preferably realized by software, but by hardware or a combination of software and hardware is also possible and conceived.

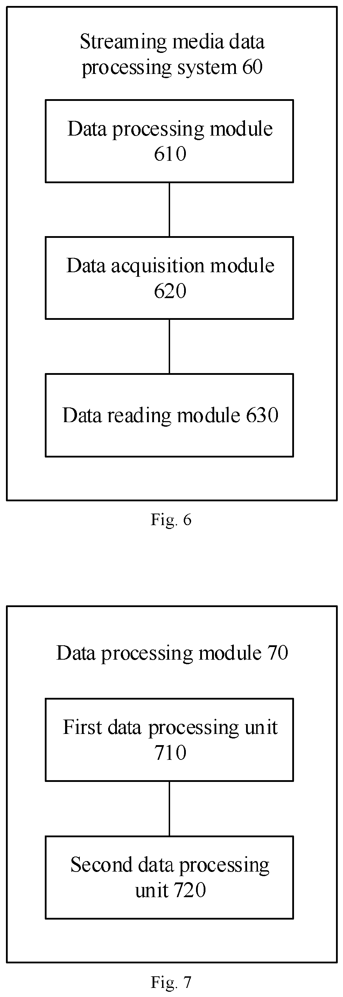

Fig. 6 is a structural block diagram of a streaming media data processing system according to an embodiment of the present disclosure. As shown in Fig. 6, a streaming media data processing system 60 includes: a data processing module 610, configured to integrate code stream data and message signaling to the same thread task channel according to different file descriptors, and buffer same into a system buffer; a data acquisition module 620, configured to acquire the code stream data from the system buffer, and store same into an internal buffer of streaming media; and a data reading module 630, configured to read the code stream data from the internal buffer of streaming media according to different types of service threads.

In one exemplary embodiment, Fig. 7 is a structural block diagram of a data processing module according to an embodiment of the present disclosure. As shown in Fig. 7, the data processing module 70 divides the data processing module 610 in the streaming media data processing system 60 shown in Fig. 6 into two parts, namely: a first data processing unit 710, configured to integrate the code stream data into the thread task channel according to a socket file descriptor; and a second data processing unit 720, configured to integrate the message signaling into the thread task channel according to a named pipe file descriptor.

Those of ordinary skill in the art should know that the data processing module may be further subdivided into a plurality of data processing units in the actual implementation process according to different data contents, which is not limited herein.

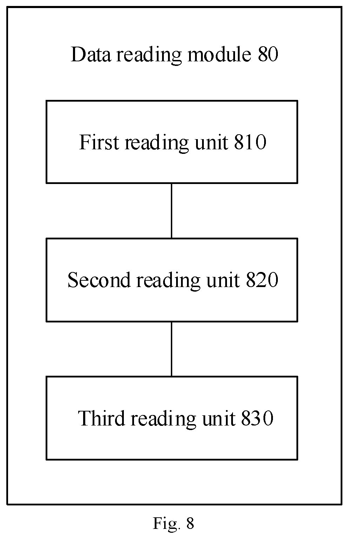

In one exemplary embodiment, Fig. 8 is a structural block diagram of a data reading module according to an embodiment of the present disclosure. As shown in Fig. 8, the data reading module 80 divides the data reading module 630 in the streaming media data processing system 60 shown in Fig. 6 into three parts, namely: a first reading unit 810, configured to read, after the code stream data is stored into the internal buffer of streaming media, the code stream data from the internal buffer of streaming media immediately according to different types of service threads; a second reading module 820, configured to read, after the code stream data is stored into the internal buffer of streaming media, the code stream data from the internal buffer of streaming media at the same time according to different types of service threads; and a second reading module 830, configured to read, after the code stream data is stored into the internal buffer of streaming media, the code stream data from the internal buffer of streaming media at any time according to the requirements of different types of service threads.

Those of ordinary skill in the art should know that the data reading module may be further subdivided into a plurality of data reading units in the actual implementation process according to different data contents, which is not limited herein.

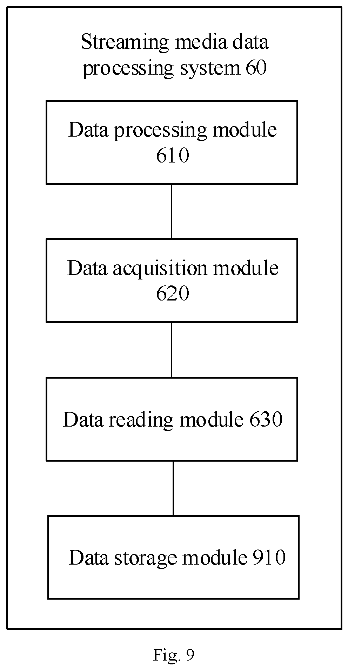

In one exemplary embodiment, Fig. 9 is a structural block diagram of a streaming media data processing system according to an embodiment of the present disclosure. As shown in Fig. 9, in addition to the various modules shown in Fig. 6, the streaming media data processing system 90 further includes: a data storage module 910, configured to store the code stream data read by the data reading module into a storage device.

Those of ordinary skill in the art should know that the various modules and units involved in the above embodiments may be combined together, or partially combined or integrated into one or more apparatuses or systems as needed, as long as the corresponding functions can be achieved.

It is to be noted that, each of the above modules may be realized by software or hardware. For the latter, the each of the above modules may be realized by, but is not limited to, the following way: all of the above modules are in the same processor; or, the above modules are respectively in different processors in form of any combination.

The embodiments of the present disclosure further provide a computer-readable storage medium, in which a computer program is stored. The computer program is configured to execute, when running, the steps in any of the above method embodiments.

In an exemplary embodiment, the computer-readable storage medium may include, but are not limited to, a U disk, an ROM, an RAM, a mobile hard disk, a magnetic disk, a compact disc, and other media capable of storing the computer program.

The embodiments of the present disclosure further provide an electronic apparatus, including a memory and a processor. The memory stores a computer program. The processor is configured to run the computer program to execute the steps in any of the above method embodiments.

In one exemplary embodiment, the electronic apparatus may further include a transmission device and an input-output device. The transmission device is connected with the processor, and the input-output device is connected with the processor.

The specific examples in the present embodiment may refer to the above embodiments and the examples described in the optional implementations, which will not be elaborated herein.

In order to enable those skilled in the art to more clearly understand the technical solutions of the present disclosure, the technical solution of the present disclosure will be described below in conjunction with specific scenario embodiments.

### Scenario Embodiment 1

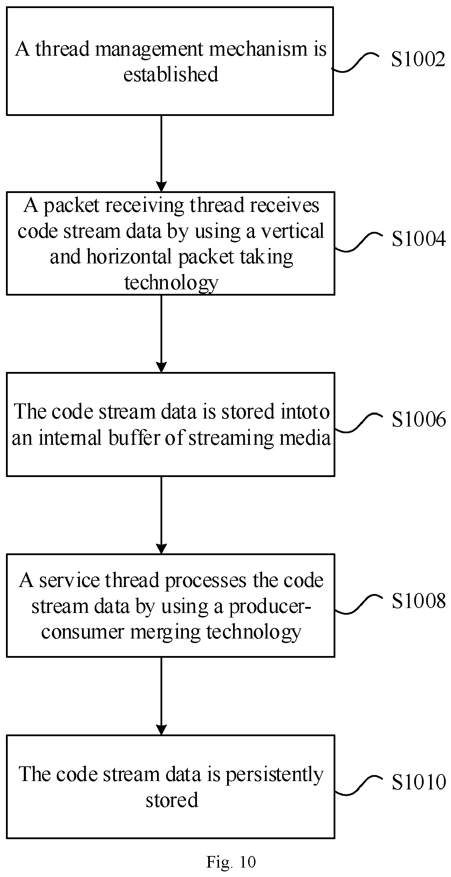

Fig. 10 is a flowchart of streaming media data processing according to a scenario embodiment of the present disclosure. As shown in Fig. 10, a streaming media data transmission model is taken as an example; first, a thread management mechanism is established in the entire link, and a channel convergence technology is proposed to reasonably manage and optimize threads; then, a streaming media packet receiving thread takes out a data packet from an operating system buffer, and a vertical and horizontal packet taking technology is proposed to improve the performance of the packet receiving stage; then, the packet receiving thread stores the taken out data packet into a circular buffer of a streaming media; then, a streaming media service thread copies the data packet from the circular buffer to the related service for data processing, and a producer-consumer merging technology is proposed to improve the data forwarding performance; and finally, data is persistently stored. The following is described in detail in conjunction with the specific steps shown in Fig. 10.

At S1002, the thread management mechanism is established.

The thread management mechanism is established in the entire link for streaming media data transmission to reasonably manage and optimize the threads, thereby reducing the system congestion and improving the transmission performance.

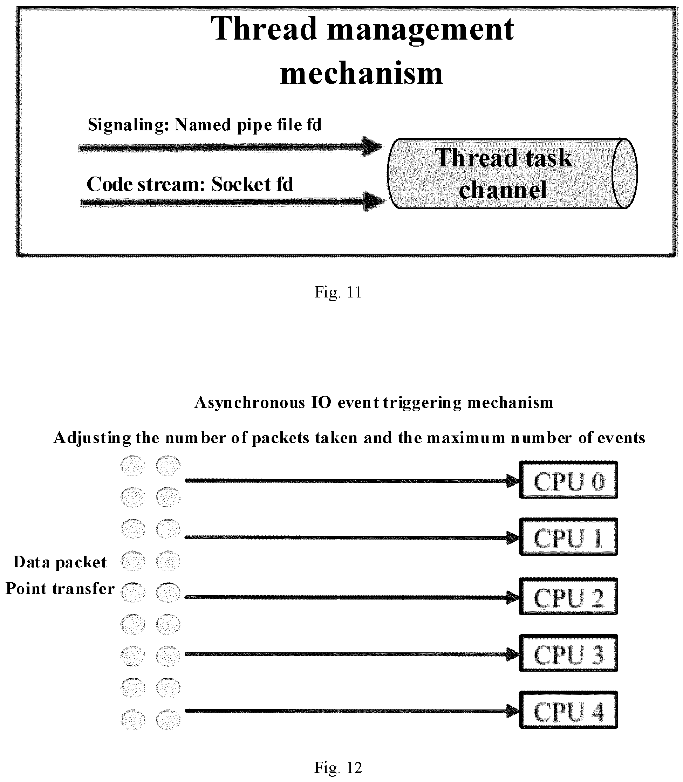

Fig. 11 is a schematic diagram of a thread management mechanism according to a scenario embodiment of the present disclosure. As shown in Fig. 11, a data packet code stream and message signaling are integrated into the same receiving thread for processing and unified management, but are distinguished in an access channel, the signaling goes through a named pipe file fd, and the code stream goes through socket fd, thereby avoiding the use of a lock to prevent multi-thread access, reducing the investment in information management, and reducing CPU congestion and code redundancy. The channel is a thread task channel.

At S1004, the packet receiving thread receives the code stream data by using the vertical and horizontal packet taking technology.

Before entering a streaming media module, media data may first reach the operating system buffer. The packet receiving thread RECEIVE of the streaming media is equivalent to an entry of the code stream data, which is responsible for taking the code stream data packet from the system buffer, that is, receiving data.

In order to improve the performance of the link, the maximum processing performance of the receiving thread is mined in a vertical direction, and hardware and system resources are fully scheduled in a horizontal direction. The vertical and horizontal combination is conducive to improving the performance of the packet receiving thread stage.

Fig. 12 is a schematic diagram of a principle of a packet receiving thread using a vertical and horizontal packet taking technology according to a scenario embodiment of the present disclosure. As shown in Fig. 12, in the vertical direction, a data packet structure is transferred by using a pointer to avoid a large memory copy; and the packet receiving thread RECEIVE adjusts the number of packets taken and the maximum number of events according to the traffic by using an asynchronous IO event trigger mechanism, thereby improving the packet taking capability of a single thread.

In the horizontal direction, the number of receiving threads is increased, a multi-thread and system multi-core CPU affinity strategy is used, the packet receiving thread RECEIVE is sent to a designated CPU core for processing; and the priority of the packet receiving thread is increased, thereby increasing the utilization of system core resources and giving priority to fast processing.

At S 1006, the code stream data is stored into the internal buffer of streaming media.

After taking out the data, the packet receiving thread stores the data packet in the circular buffer rBuffer in the streaming media. The rBuffer may recycle a resource pool without increasing the storage capacity, thereby avoiding memory fragmentation. The module is responsible for temporarily buffering the data packet taken out from the system buffer by the packet receiving thread RECEIVE, which is equivalent to backing up the data packet, so that subsequent different services may read the data at the same time, such as RECORD storage and PLAY forwarding, so as to achieve simultaneous storage and playing.

At S1008, the service threads process the code stream data by using a producer-consumer merging technology.

The service threads are logically located behind rBuffer. Various service threads may read the data in rBuffer at the same time for respective service flows, such as RECORD thread storage, PLAY thread forwarding, and the like.

In order to improve the performance of the link, the packet receiving thread is taken as a producer and the service thread are taken as consumers in a producer/consumer mode, and these working threads are unified into the actual same thread, so as to improve the performance of an rBuffer module and the data processing performance of the service threads.

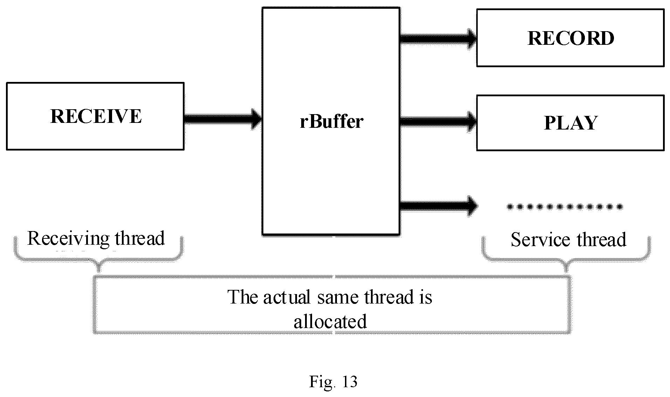

Fig. 13 is a schematic diagram of a principle of a producer-consumer merging technology of a service thread according to a scenario embodiment of the present disclosure. As shown in Fig. 13, rBuffer is regarded as a center point, the packet receiving thread RECEIVE is regarded as the producer, and the service threads RECORD, PLAY, etc. are regarded as the consumers. The data packet is transferred from the producer RECEIVE thread to the consumer RECORD, PLAY, and other threads through rBuffer. The technology decouples different working threads in an asynchronous calling manner, thereby reducing the mutual influence between the threads, and reducing the time-consuming delay.

Based on the technology, various abstract working threads are regarded as working tasks and uniformly merged into the same actual thread and CPU for processing. At the same time, when the task is assigned, the task is assigned to the thread with the smallest load based on the number of tasks of the current thread, so that hardware resources are more fully utilized and the extra consumption of the operating system in creating and managing the threads is reduced.

At S 1010, the code stream data is persistently stored.

The link is the end of the code stream data transmission, and needs to be put in a storage device for persistence after receiving, forwarding and other processing. As shown in Fig. 2, after reading the data packet from rBuffer, the recording thread RECORD first writes the data packet into the IO Buffer buffer. When the file is closed or the buffer is full, the data of the buffer is flushed to the local storage or object storage to reduce the read and write IO pressure.

In summary, the embodiments of the present disclosure provide the streaming media data processing method and system. Theoretically, the data code stream can be processed at the full bandwidth speed under a bandwidth of 10 Gigabit (10 Gbps). According to the embodiments of the present disclosure, the receiving and forwarding performance of the streaming media system is greatly improved, and the resources and costs can be greatly saved for audio and video related industries. For the problem of packet loss of data of a streaming media data receiving and processing forwarding link in a case of high traffic, in the embodiments of the present disclosure, the thread management mechanism is first established in the entire link, the code stream and the signaling are integrated into the same receiving thread for processing and unified management, but are distinguished in the access channel, so as to avoid the use of the lock to prevent multi-threaded access, which is conducive to optimizing thread management and reducing system congestion. That is, a channel convergence technology is proposed to reasonably manage and optimize the threads. Then, in the vertical direction, the packet taking performance of a single packet receiving thread is improved; and in the horizontal direction, the core resources are expanded in batches, which is conducive to speeding up taking out the code stream data packet from the system buffer and storing same into the internal buffer of streaming media. That is, the vertical and horizontal packet taking technology is proposed to improve the performance of the data receiving stage. Finally, different working threads are decoupled in an asynchronous calling manner to reduce the mutual influence and the time-consuming delay between the threads; and in addition, the abstract threads are merged into the same actual thread and core for processing, which reduces the extra consumption of the threads, fully utilizes the system resources, and helps speed up the data processing of the internal buffer module. That is, the producer-consumer merging technology is proposed to improve the performance of the data processing stage.

The embodiments of the present disclosure are applicable to the audio and video related industries based on streaming data processing, such as video conferencing, video Internet of Things, and video middle platforms, and specifically, may be used in high-concurrency scenarios with huge number of access routes and traffic, may be used for high-performance data forwarding, may be used for services without packet loss requirements, etc. In the embodiments of the present disclosure, the data stream link flow and analysis idea, a phased performance optimization technology, the solution design, and the like have obvious characteristics. The purposes similar to or identical to those of the embodiments of the present disclosure are achieved by means of packet capture, service calling chain tracking tools, and the like should all be within the scope of protection of the present disclosure.

It is apparent that those skilled in the art should appreciate that the above modules and steps of the present disclosure may be implemented by a general-purpose computing device, and they may be centralized in a single computing device or distributed on a network composed of multiple computing devices; they may be implemented by a program code which is capable of being executed by the computing device, so that they may be stored into a storage device and executed by the computing device; and in some situations, the presented or described steps may be executed in an order different from that described here; or they are made into integrated circuit modules, respectively; or multiple modules and steps of them are made into a single integrated circuit module to realize. Therefore, the present disclosure is not limited to any particular combination of hardware and software.

## Claims

1. A streaming media data processing method, comprising:
integrating (S302) code stream data and message signaling to one thread task channel according to different file descriptors, and buffering the integrated code stream data and the message signaling into a system buffer;
acquiring (S304), by a packet receiving thread, the code stream data from the system buffer, and storing the acquired code stream data into an internal buffer of streaming media; and
reading (S306), by different types of service threads, the code stream data from the internal buffer of streaming media.

2. The method according to claim 1, wherein the code stream data and the message signaling are distinguished **in** the thread task channel by a socket file descriptor and a named pipe file descriptor respectively.

3. The method according to claim 1, wherein acquiring (S304), by a packet receiving thread, the code stream data from the system buffer comprises:
transferring a data packet structure of the code stream data by using a pointer, acquiring, by the packet receiving thread, the code stream data from the system buffer by using an asynchronous Input/Output, IO, event triggering mechanism, and adjusting number of packets taken and maximum number of events according to traffic of the code stream data.

4. The method according to claim 1, wherein acquiring (S304), by a packet receiving thread, the code stream data from the system buffer further comprises:
acquiring the code stream data from the system buffer by using a multi-packet-receiving-thread, sending the code stream data acquired to a designated Central Processing Unit, CPU, in a multi-core CPU for processing, and increasing priority of the packet receiving thread.

5. The method according to claim 4, wherein the reading (S306), by different types of service threads, the code stream data from the internal buffer of streaming media comprises:
transferring, by the packet receiving thread and the service threads, a data packet of the code stream data with the internal buffer of streaming media as a center in a producer/consumer mode, wherein the packet receiving thread is a producer and the service threads are consumers.

6. The method according to claim 5, wherein the reading (S306), by different types of service threads, the code stream data from the internal buffer of streaming media further comprises:
merging (S402) the different types of service threads into the packet receiving thread and using CPU for processing; and
according (S404) to number of tasks of the different types of service threads, selecting a packet receiving thread with smallest load among multiple of packet receiving threads for processing.

7. The method according to claim 6, wherein the internal buffer of streaming media is a circular resource pool.

8. The method according to claim 1, wherein after reading (S306), by the different types of service threads, the code stream data from the internal buffer of streaming media, the method further comprises:
storing (S508), by the different types of service threads, the code stream data into a storage device for data persistence storage.

9. A streaming media data processing system, comprising:
a data processing module (610), configured to integrate code stream data and message signaling to one thread task channel according to different file descriptors, and buffer the integrated code stream data and the message signaling into a system buffer;
a data acquisition module (620), configured to acquire the code stream data from the system buffer, and store the acquired code stream data into an internal buffer of streaming media; and
a data reading module (630), configured to read the code stream data from the internal buffer of streaming media according to different types of service threads.

10. The system according to claim 9, wherein the data processing module (610) comprises at least one of the following:
a first data processing unit (710), configured to integrate the code stream data into the thread task channel according to a socket file descriptor; or
a second data processing unit (720), configured to integrate the message signaling into the thread task channel according to a named pipe file descriptor.

11. The system according to claim 9, wherein the data reading module (630) comprises at least one of the following:
a first reading module (810), configured to read, after the code stream data is stored into the internal buffer of streaming media, the code stream data from the internal buffer of streaming media immediately according to different types of service threads;
a second reading module (820), configured to read, after the code stream data is stored into the internal buffer of streaming media, the code stream data from the internal buffer of streaming media at the same time according to different types of service threads; or
a third reading module (830), configured to read, after the code stream data is stored into the internal buffer of streaming media, the code stream data from the internal buffer of streaming media at any time according to the requirements of different types of service threads.

12. The system according to claim 9, further comprising:
a data storage module (910), configured to store the code stream data read by the data reading module into a storage device.

13. The system according to claim 9, wherein the streaming media data processing system is a server, which comprises one of following: a physical machine, a virtual machine, or a Docker containerized environment.

14. A computer-readable storage medium, in which a computer program is stored, wherein the computer program is configured to, when executed by a processor, implement the method according to any one of claims 1 to 8.

## Patentansprüche

1. Verfahren zur Verarbeitung von Streaming-Mediendaten, umfassend:
Integrieren (S302) Code-Stream-Daten und Nachrichtensignalisierung in einen Thread-Task-Kanal nach verschiedenen Dateideskriptoren und Puffern der integrierten Code-Stream-Daten und der Nachrichtensignalisierung in einem Systempuffer;
Erfassen (S304) der Code-Stream-Daten durch einen Paketempfang-Thread aus dem Systempuffer und Speichern der erfassten Code-Stream-Daten in einem internen Puffer für Streaming-Medien; und
Lesen (S306) der Code-Stream-Daten durch verschiedenen Arten von Dienst-Threads aus dem internen Puffer für Streaming-Medien.

2. Verfahren nach Anspruch 1, wobei die Code-Stream-Daten und die Nachrichtensignalisierung in dem Thread-Task-Kanal jeweils durch einen Socket-Dateideskriptor und einen benannten Pipe-Dateideskriptor unterschieden werden.

3. Verfahren nach Anspruch 1, wobei Erfassen (S304) der Code-Stream-Daten durch einen Paketempfang-Thread aus dem Systempuffer umfasst:
Übertragen einer Datenpaketstruktur der Code-Stream-Daten mittels eines Zeigers, Erfassen der Code-Stream-Daten durch den Paketempfang-Thread aus dem Systempuffer mittels eines asynchronen Eingabe-/Ausgabe, (IO), Ereignisauslösemechanismus, und Anpassen der Anzahl aufgenommener Pakete und der maximalen Ereignisanzahl nach dem Verkehr der Code-Stream-Daten.

4. Verfahren nach Anspruch 1, wobei Erfassen (S304) der Code-Stream-Daten durch einen Paketempfang-Thread aus dem Systempuffer ferner umfasst:
Erfassen der Code-Stream-Daten aus dem Systempuffer mittels eines Mehrfach-Paketempfang-Threads, Senden der erfassten Code-Stream-Daten an eine zugewiesene zentrale Verarbeitungseinheit (CPU) in einer Mehrkern-CPU zur Verarbeitung, und Erhöhen der Priorität des Paketempfang-Threads.

5. Verfahren nach Anspruch 4, wobei Lesen (S306) der Code-Stream-Daten durch verschiedenen Arten von Dienst-Threads aus dem internen Puffer für Streaming-Medien umfasst:
die Übertragen eines Datenpakets der Code-Stream-Daten durch den Paketempfang-Thread und die Dienst-Threads mit dem internen Puffer für Streaming-Medien als Zentrum in einem Erzeuger-/Verbraucher-Modus, wobei der Paketempfang-Thread ein Erzeuger ist und die Dienst-Threads Verbraucher sind.

6. Verfahren nach Anspruch 5, wobei Lesen (S306) der Code-Stream-Daten durch verschiedenen Arten von Dienst-Threads aus dem internen Puffer für Streaming-Medien ferner umfasst:
Zusammenführen (S402) der verschiedenen Arten von Dienst-Threads in den Paketempfang-Thread und Verwenden der CPU zur Verarbeitung; und
nach (S404) der Anzahl von Tasks der verschiedenen Arten von Dienst-Threads, Auswahlen eines Paketempfangs-Threads mit der geringsten Last unter mehreren Paketempfang-Threads zur Verarbeitung

7. Verfahren nach Anspruch 6, wobei der interne Puffer für Streaming-Medien ein zirkulärer Ressourcenpool ist.

8. Verfahren nach Anspruch 1, wobei nach Lesen (S306) der Code-Stream-Daten durch die verschiedenen Arten von Dienst-Threads aus dem internen Puffer für Streaming-Medien das Verfahren ferner umfasst:
Speichern (S508) der Code-Stream-Daten durch die verschiedenen Arten von Dienst-Threads in einem Speichermedium zur Dauer-Datenspeicherung.

9. System zur Verarbeitung von Streaming-Mediendaten, umfassend:
ein Datenverarbeitungsmodul (610), das dazu konfiguriert ist, Code-Stream-Daten und Nachrichtensignalisierung in einen Thread-Task-Kanal nach verschiedenen Dateideskriptoren zu integrieren und die integrierten Code-Stream-Daten und die Nachrichtensignalisierung in einem Systempuffer zu puffern;
ein Datenerfassungsmodul (620), das dazu konfiguriert ist, die Code-Stream-Daten aus dem Systempuffer zu erfassen und die erfassten Code-Stream-Daten in einem internen Puffer für Streaming-Medien zu speichern; und
ein Datenlesemodul (630), das dazu konfiguriert ist, die Code-Stream-Daten aus dem internen Puffer für Streaming-Medien nach verschiedenen Arten von Dienst-Threads zu lesen.

10. System nach Anspruch 9, wobei das Datenverarbeitungsmodul (610) mindestens eine der folgenden umfasst:
eine erste Datenverarbeitungseinheit (710), die dazu konfiguriert ist, die Code-Stream-Daten in den Thread-Task-Kanal nach einem Socket-Dateideskriptor zu integrieren; oder
eine zweite Datenverarbeitungseinheit (720), die dazu konfiguriert ist, die Nachrichtensignalisierung in den Thread-Task-Kanal nach einem benannten Pipe-Dateideskriptor zu integrieren.

11. System nach Anspruch 9, wobei das Datenlesemodul (630) mindestens einen der folgenden umfasst:
ein erstes Lesemodul (810), das dazu konfiguriert ist, die Code-Stream-Daten aus dem internen Puffer für Streaming-Medien, nachdem sie in dem internen Puffer für Streaming-Medien gespeichert wurden, nach verschiedenen Arten von Dienst-Threads unmittelbar zu lesen;
ein zweites Lesemodul (820), das dazu konfiguriert ist, die Code-Stream-Daten aus dem internen Puffer für Streaming-Medien, nachdem sie in dem internen Puffer für Streaming-Medien gespeichert wurden, nach verschiedenen Arten von Dienst-Threads gleichzeitig zu lesen; oder
ein drittes Lesemodul (830), das dazu konfiguriert ist, die Code-Stream-Daten aus dem internen Puffer für Streaming-Medien, nachdem sie in dem internen Puffer für Streaming-Medien gespeichert wurden, jederzeit nach den Anforderungen der verschiedenen Arten von Dienst-Threads zu lesen.

12. System nach Anspruch 9, ferner umfassend:
ein Datenspeichermodul (910), das dazu konfiguriert ist, die Code-Stream-Daten, die der durch das Datenlesemodul gelesen wurden, in einer Speichervorrichtung zu speichern.

13. System nach Anspruch 9, wobei das System zur Verarbeitung von Streaming-Mediendaten ein Server ist, der eine der folgenden Komponenten umfasst: eine physische Maschine, eine virtuelle Maschine oder eine Docker-containerisierte Umgebung.

14. Computerlesbares Speichermedium, in dem ein Computerprogramm gespeichert ist, wobei das Computerprogramm dazu konfiguriert ist, sodass es, wenn es von einem Prozessor ausgeführt wird, das Verfahren nach einem der Ansprüche 1 bis 8 implementiert.

## Revendications

1. Procédé de traitement de données multimédias de diffusion en continu, comprenant:
l'intégration (S302) de données de flux de code et de signalisation de message dans un canal de tâche de thread unique selon différents descripteurs de fichier, et la mise en mémoire tampon des données de flux de code intégrées et de la signalisation de message dans une mémoire tampon système ;
l'acquisition (S304), par un thread de réception de paquets, des données de flux de code depuis la mémoire tampon système, et le stockage des données de flux de code acquises dans une mémoire tampon interne de multimédia en continu ; et
la lecture (S306), par différents types de threads de service, des données de flux de code depuis la mémoire tampon interne de multimédia en continu.

2. Le procédé selon la revendication 1, dans lequel les données de flux de code et la signalisation de message sont distinguées dans le canal de tâche de thread respectivement par un descripteur de fichier de socket et un descripteur de fichier de tube nommé.

3. Le procédé selon la revendication 1, dans lequel l'acquisition (S304), par un thread de réception de paquets, des données de flux de code depuis la mémoire tampon système comprend :
le transfert d'une structure de paquet de données des données de flux de code à l'aide d'un pointeur, l'acquisition, par le thread de réception de paquets, des données de flux de code depuis la mémoire tampon système à l'aide d'un mécanisme de déclenchement d'événements d'entrée/sortie (IO) asynchrone, et l'ajustement du nombre de paquets pris et du nombre maximal d'événements selon le trafic des données de flux de code.

4. Le procédé selon la revendication 1, dans lequel l'acquisition (S304), par un thread de réception de paquets, des données de flux de code depuis la mémoire tampon système comprend en outre :
l'acquisition des données de flux de code depuis la mémoire tampon système à l'aide d'un thread de réception de paquets multiple, l'envoi des données de flux de code acquises à une unité centrale de traitement (CPU) désignée dans une CPU multi-cœur pour traitement, et l'augmentation de la priorité du thread de réception de paquets.

5. Le procédé selon la revendication 4, dans lequel la lecture (S306), par différents types de threads de service, des données de flux de code depuis la mémoire tampon interne de multimédia en continu comprend :
le transfert, par le thread de réception de paquets et les threads de service, d'un paquet de données des données de flux de code avec la mémoire tampon interne de multimédia en continu comme centre dans un mode producteur/consommateur, dans lequel le thread de réception de paquets est un producteur et les threads de service sont des consommateurs.

6. Le procédé selon la revendication 5, dans lequel la lecture (S306), par différents types de threads de service, des données de flux de code depuis la mémoire tampon interne de multimédia en continu comprend en outre :
la fusion (S402) des différents types de threads de service dans le thread de réception de paquets et l'utilisation du CPU pour traitement ; et
selon (S404) le nombre de tâches des différents types de threads de service, la sélection d'un thread de réception de paquets avec la plus petite charge parmi une pluralité de threads de réception de paquets pour traitement.

7. Le procédé selon la revendication 6, dans lequel la mémoire tampon interne de multimédia en continu est une réserve circulaire de ressources.

8. Le procédé selon la revendication 1, dans lequel, après la lecture (S306), par les différents types de threads de service, des données de flux de code depuis la mémoire tampon interne de multimédia en continu, le procédé comprend en outre :
le stockage (S508), par les différents types de threads de service, des données de flux de code dans un dispositif de stockage pour stockage persistant de données.

9. Système de traitement de données multimédias de diffusion en continu, comprenant :
un module de traitement de données (610), configuré pour intégrer des données de flux de code et une signalisation de message dans un canal de tâche de thread unique selon différents descripteurs de fichier, et mettre en mémoire tampon les données de flux de code intégrées et la signalisation de message dans une mémoire tampon système ;
un module d'acquisition de données (620), configuré pour acquérir les données de flux de code depuis la mémoire tampon système, et stocker les données de flux de code acquises dans une mémoire tampon interne de multimédia en continu ; et
un module de lecture de données (630), configuré pour lire les données de flux de code depuis la mémoire tampon interne de multimédia en continu selon différents types de threads de service.

10. Le système selon la revendication 9, dans lequel le module de traitement de données (610) comprend au moins une des unités suivantes :
une première unité de traitement de données (710), configurée pour intégrer les données de flux de code dans le canal de tâche de thread selon un descripteur de fichier de socket ; ou
une seconde unité de traitement de données (720), configurée pour intégrer la signalisation de message dans le canal de tâche de thread selon un descripteur de fichier de tube nommé.

11. Le système selon la revendication 9, dans lequel le module de lecture de données (630) comprend au moins l'un des modules suivants :
un premier module de lecture (810), configuré pour lire, après que les données de flux de code ont été stockées dans la mémoire tampon interne de multimédia en continu, les données de flux de code depuis la mémoire tampon interne de multimédia en continu immédiatement selon différents types de threads de service ;
un second module de lecture (820), configuré pour lire, après que les données de flux de code ont été stockées dans la mémoire tampon interne de multimédia en continu, les données de flux de code depuis la mémoire tampon interne de multimédia en continu simultanément selon différents types de threads de service ; ou
un troisième module de lecture (830), configuré pour lire, après que les données de flux de code ont été stockées dans la mémoire tampon interne de multimédia en continu, les données de flux de code depuis la mémoire tampon interne de multimédia en continu à tout moment selon les exigences des différents types de threads de service.

12. Le système selon la revendication 9, comprenant en outre :
un module de stockage de données (910), configuré pour stocker les données de flux de code lues par le module de lecture de données dans un dispositif de stockage.

13. Le système selon la revendication 9, dans lequel le système de traitement de données multimédias de diffusion en continu est un serveur, qui comprend l'un des éléments suivants : une machine physique, une machine virtuelle ou un environnement conteneurisé Docker.

14. Support de stockage lisible par ordinateur, dans lequel un programme informatique est stocké, ledit programme informatique étant configuré pour, lorsqu'il est exécuté par un processeur, mettre en œuvre le procédé selon l'une quelconque des revendications 1 à 8.
